# EUROPÄISCHE PATENTANMELDUNG

(11) **EP 3 508 556 A1**
(43) Veröffentlichungstag der Anmeldung: **10.07.2019**
(21) Anmeldenummer: 19150171.7
(22) Anmeldetag: 03.01.2019
(51) Int. Cl.: C10B 49/04, C10J 3/66, C10J 3/26, C10K 3/00

(54) **VERFAHREN ZUM BETREIBEN EINER ANLAGE ZUR ENERGIEGEWINNUNG UND ANLAGE HIERFÜR**

(30) Priorität: 04.01.2018 AT 52018
(71) Anmelder: Hirr, Günter, 9360 Friesach (AT)
(72) Erfinder: Hirr, Günter, 9360 Friesach (AT)
(74) Vertreter: Beer & Partner Patentanwälte KG

(57) **Zusammenfassung**

Bei einer Anlage zur Energiegewinnung wird Biomasse als Ausgangsstoff in einem gestuften Vergasungsverfahren, insbesondere in einem 2-stufigen Vergasungsverfahren, in energetisch nutzbare Produkte umgewandelt, wobei in einem Schritt eine Pyrolyse stattfindet und ein Pyrolyseprodukt in einem weiteren Schritt einem Reaktor (16) zugeführt wird. Die Biomasse wird in einer Pyrolyseeinheit (2) teilentgast und unter Entstehung von Schwelgas zu Holzkohle als energetisch nutzbares Produkt umgewandelt. Die Holzkohle wird vom Schwelgas getrennt und das Schwelgas wird dem Reaktor (16) zugeführt, wobei der Gasstrom im Reaktor (16) erhitzt und durch eine glühende Kohlenstoffquelle (19) geführt und zu Synthesegas als energetisch nutzbares Produkt aufbereitet wird.

## Beschreibung

Die Erfindung betrifft ein Verfahren zum Betreiben einer Anlage zur Energiegewinnung, wobei Biomasse als Ausgangsstoff in einem gestuften Vergasungsverfahren, insbesondere in einem 2-stufigen Vergasungsverfahren, in wenigstens ein energetisch nutzbares Produkt umgewandelt wird, wobei in einem Schritt eine Pyrolyse stattfindet und ein Pyrolyseprodukt in einem weiteren Schritt einem Reaktor zugeführt wird.

Zudem betrifft die Erfindung eine Anlage zur Energiegewinnung aus Biomasse mit wenigstens zwei Vergasungsstufen, in denen Biomasse in wenigstens ein energetisch nutzbares Produkt umwandelbar ist, wobei eine erste Vergasungsstufe eine Pyrolyseeinheit und eine weitere Vergasungsstufe einen Reaktor, insbesondere einen Gaswandler, aufweist.

Zum Vergasen von Biomasse sind insbesondere die Systeme der Festbettvergasung und der Wirbelschichtvergasung bekannt. Ebenfalls sind Flugstromvergaser bekannt, welche nur für Großanlagen geeignet sind.

Zum Vergasen von Biomasse ist eine Vergasung in einstufigen Schachtvergasern bekannt, wobei ein einstufiger Prozess jedoch in Hinblick auf Anlagendauerbetriebsfähigkeit, Rückstände, Anlagenemissionen und auch Wirtschaftlichkeit Nachteile hat. Daher geht bereits seit einigen Jahren die Entwicklung in Richtung primärer Schadstoffvermeidung durch mehrteilige Prozessstufung in der Gaserzeugung. Gestufte Systeme bzw. mehrstufige Systeme stellen somit die nächste Generation von Vergasungsverfahren dar. Gestufte Systeme nähern sich den praktischen Anforderungen hinsichtlich Wirtschaftlichkeit, Funktionstüchtigkeit und Schadstoffvermeidung.

Derzeit bekannte gestufte Vergasungssysteme zeichnen sich dadurch aus, dass eine apparatetechnische Trennung des ersten Teilschritts der Pyrolyse des eingesetzten Materials in einer Pyrolysestufe vom zweiten Teilschritt der partiellen Oxidation und Reduktion in einer Reaktorstufe erfolgt. In der Reaktorstufe wird als Primärmaßnahme die Reduktion der Menge der bei der Pyrolysestufe entstandenen Teere und Benzole durch entsprechende Temperaturen erreicht.

Zwar ermöglicht die bekannte gestufte Vergasung grundsätzlich niedrige organische und anorganische Verunreinigungen als einstufige Verfahren. In der Praxis bestehen bei dieser Technik des gestuften Vergasungssystems jedoch immer noch Nachteile betreffend die Vermeidung bzw. Behandlung von Schadstoffen, insbesondere Holzteere, Ammoniak und andere Aerosole. Die bislang in Nicht-Großanlagen angewendeten Technologien lassen sich lediglich in den Stand einer technischen Entwicklung einstufen. Die weitere Minimierung der Schadstoffe und der Emissionen stellt daher jene zentrale Herausforderung bzw. Anforderung dar, welche über weitere Entwicklungen gestufter Systeme erreicht werden soll. Weitere Anforderungen bestehen in der Praxis in der weiteren Steigerung der Anlagenverfügbarkeit und -effizienz.

Bislang ist es üblich, den gesamten Input an Biomasse, auch wenn sich dieser durch die thermische Einwirkung chemisch zerlegt und physikalisch verändert, bis in die letzte Vergasungsstufe mitzuführen. Dabei ist eine sehr schwierige Behandlung des Gases wie auch aller Pyrolysenebenprodukte nicht nur während des Vergasungsprozesses erforderlich, sondern setzt sich danach in einer rigoros durchzuführenden Gasreinigung in einem Gasfilter und -wäscher wie auch in der Entsorgung von Abfällen fort.

Der Erfindung liegt die Aufgabe zu Grunde, eine verbesserte technische Anlage zur Energiegewinnung durch Vergasung von Biomasse, sowie ein Verfahren zum Betreiben einer solchen Anlage zur Verfügung zu stellen, welche die zuvor genannten Nachteile vermeiden und die zuvor genannten Anforderungen insbesondere an die Gasreinheit erfüllen. Insbesondere ist es auch eine Aufgabe der Erfindung, dass die untere Leistungsgrenze von Anlagen reduziert werden kann, wodurch nicht nur Großanlagen, sondern auch kleinere Anlagen realisiert werden können.

Unter den Begriff Biomasse fallen dabei im Sinne der Erfindung insbesondere (und daher nicht einschränkend) alle geeigneten, energetisch nutzbaren, biogenen Stoffe, insbesondere forstliche Biomasse, und andere kohlenstoffhaltige, natürliche Stoffe bzw. vorwiegend auf Kohlenstoff aufgebaute Energieträger und Abfälle aus dem landwirtschaftlichen Bereich und dem Ernährungsbereich.

Gelöst wird diese Aufgabe durch ein Verfahren, welches die Merkmale des Anspruches 1 aufweist.

Zudem wird diese Aufgabe durch eine Anlage gelöst, welche die Merkmale des Anspruches 9 aufweist.

Bevorzugte und vorteilhafte Ausführungsformen der Erfindung sind Gegenstand der Unteransprüche.

Erfindungsgemäß ist vorgesehen, dass die Biomasse in einer Pyrolyseeinheit teilentgast und unter Entstehung von Schwelgas zu Holzkohle als potentiell energetisch nutzbares Produkt umgewandelt wird, dass die Holzkohle vom Schwelgas, d.h. vollständig vom weiter zu behandelnden Gasstrom getrennt wird und dass das Schwelgas einem Reaktor zugeführt wird, wobei der Gasstrom im Reaktor erhitzt und durch eine glühende Kohlenstoffquelle geführt und zu Synthesegas als energetisch nutzbares Produkt aufbereitet wird. Hierzu ist vorgesehen, dass die Pyrolyseeinheit derart steuerbar ist, dass die Biomasse teilentgast und unter Entstehung von Schwelgas zu Holzkohle umwandelbar ist, dass die Pyrolyseeinheit Einrichtungen zum Trennen der Holzkohle vom Schwelgas aufweist, dass eine Leitung von der Pyrolyseeinheit zum Reaktor vorgesehen ist, über welche das Schwelgas dem Reaktor zuführbar ist, und dass der Reaktor in Richtung der Gasströmung gesehen eine Brennkammer und danach eine glühende Kohlenstoffquelle aufweist.

Somit können bislang problematische Schadstoffe und Emissionen vermieden werden, wobei die Anlagenverfügbarkeit und -effizienz gesteigert wird und wobei zugleich teuer zu entsorgende Pyrolyseabfälle (Asche) vermieden werden.

Mit dieser Technik des gestuften Vergasungssystems sind folgende Vorteile verbunden:
a) Die Dauerbetriebsfähigkeit (Anlagenverfügbarkeit) wird durch die Reduktion von Teeren im Produktgas verbessert.
b) Durch die Senkung der Produktgasbeladung mit Schadstoffen (Teere, Benzol, Aerosole, Partikel) ist die nach dem Verlassen der Entgasungseinrichtungen nachfolgende Gasreinigung im Hinblick auf Investition, Betrieb und Wartung weniger aufwendig.
c) Die Gesamtprozesskomplexität sinkt durch die Einsparungen für die Gasreinigung, wodurch ein wirtschaftlicherer Betrieb gefördert wird.
d) Eine untere Leistungsgrenze von Anlagen kann reduziert werden, wodurch die Realisierungsmöglichkeit von Projekten steigt.
e) Die Effizienz des gesamten Gaserzeugungsprozesses kann durch Wärmerückführung gesteigert werden.
f) Es kann eine Erweiterung des einsetzbaren Brennstoffbandes (Feuchtigkeit, Stückigkeit, Porosität der Schüttung, usw.) erfolgen.

In einer besonders bevorzugten Ausführungsform ist vorgesehen, dass getrocknete Biomasse als Ausgangsstoff verwendet wird, wobei die Biomasse insbesondere durch Abwärme aus dem gesamten Systemprozess getrocknet wird. Hierzu ist vorgesehen, dass die Anlage einen Trockner für die Biomasse als Ausgangsstoff für die erste Vergasungsstufe aufweist, wobei der Trockner mit Mitteln zum Übertragen der Abwärme aus Teilen der Anlage in Verbindung steht.

Als Ausgangsstoff wird im Rahmen der Erfindung Biomasse mit einem Wassergehalt von ca. 10 - 15 % als ideal betrachtet. Bei der Verwendung von ungetrockneter oder teilgetrockneter Biomasse würde, sollte die Feuchtigkeit der Biomasse erst während der Entgasung in der Pyrolyseeinheit verdampft werden müssen, das dafür benötigte Gas als Energielieferant der Gasgesamteffizienz fehlen. Zudem kann ungetrocknete Biomasse mit Überschussenergie in Zeiten des Nichtbedarfs von produzierter Wärmeenergie vorgetrocknet und auf Vorrat gelegt sowie bei entsprechendem Bedarf eingesetzt werden. Mit dem System der Vortrocknung wird eine bestmögliche Energieeffizienz erreicht. Weiters wirkt sich ein geringerer Wasseranteil in der verwendeten Biomasse, da später als Wasserdampf energetisch wertlos, vorteilhaft auf die Zusammensetzung bzw. Energieleistung des Schwelgases aus.

Als zu verarbeitendes Material ist Hackgut, beispielsweise Säge- und Waldabfälle, aber auch geringe Mengen an Baumrinde und Sägespäne möglich. Die Stückgröße der Hackschnitzel sollte die Maße G30 - G50 nicht wesentlich übersteigen, jedoch kann ein geringer Teil Späne, Rinde und Waldholzabfälle den Hackschnitzeln beigemengt sein.

Nimmt man ein bekanntes zweistufiges Vergasungsverfahren als Ausgangslage, besteht ein entscheidender Unterschied zu dem erfindungsgemäßen Verfahren darin, dass die gasförmigen und festen Produkte der Pyrolyseeinheit vom fortlaufenden Verfahren geteilt bzw. getrennt werden. Die nach der Pyrolysestufe bzw. der ersten Pyrolysestufe als homogener Teil des eingesetzten Energieträgers "Biomasse" entstandene Holzkohle wird, ohne die vollständige Entgasung erreicht zu haben, dem Verfahren entnommen. Hierzu weist die Pyrolyseeinheit eine Entnahmevorrichtung für die Holzkohle auf. Die entstandene Holzkohle wird daher vom weiteren Vergasungsschritt bzw. von weiteren Vergasungsschritten vollständig entkoppelt, ausgeschleust und einer weiteren Verwertung zugeführt.

Im Rahmen der Erfindung bedeutet der Begriff "teilentgast", dass die Biomasse nicht vollständig ent- und vergast wird. Bei einer vollständigen bzw. im Wesentlichen vollständigen Entgasung kann keine Holzkohle als energetisch nutzbares Produkt mehr entstehen, sondern es entsteht Asche und anderes inertes Material als Pyrolysereststoff. Pyrolysereststoffe sind an sich keine energetisch nutzbaren Produkte mehr, da die Biomasse als Ausgangsstoff dann quasi vernichtet ist und selbst keinen nennenswerten, energetisch nutzbaren Wert mehr besitzt.

Im Gegensatz dazu kann die erfindungsgemäß hergestellte Holzkohle direkt als energetisch nutzbares Produkt verwendet werden, da die Biomasse als Ausgangsstoff eben nicht vollständig bzw. im Wesentlichen vollständig entgast wird. Die Holzkohle stellt somit zwar ein wesentliches Pyrolyseprodukt, aber keinen Pyrolysereststoff mehr dar.

Im Rahmen der Erfindung ist es bevorzugt, dass Holzkohle als energetisch nutzbares Produkt der Pyrolyseeinheit entnommen wird, wobei in der Folge die Holzkohle zu Briketts, insbesondere zu Grillkohle-Briketts, verarbeitet wird. Die erfindungsgemäß hergestellte Holzkohle kann ohne Zugabe von weiterem energetisch nutzbarem Material zu Grillkohle-Briketts gepresst werden, wogegen Pyrolysereststoffe selbst als Energielieferant wegen Ermangelung bzw. nicht vorhandenem energetischem Material nicht zu Grillkohle-Briketts gepresst und verwertbar gemacht werden können.

In einer bevorzugten Ausführungsform ist vorgesehen, dass die entnommene Holzkohle mit energetischen Zusatzmaterialien und/oder mit Stärke, insbesondere biogenem Stärkemittel, zu Grillkohle-Briketts verarbeitet und verwendbar gemacht wird.

Im Rahmen der Erfindung kann die entnommene Kohle, gesiebt, fraktioniert und für verschiedene Anwendungen verwendet und/oder weiterverarbeitet werden.

Neben der Verwertung als Grillkohle-Briketts kann die erfindungsgemäß gewonnene Holzkohle auch zu anderen Zwecken verwertet werden. Besondere Eigenschaften der Holzkohle sind die Kohlenstoffreinheit, ein niedriger Aschegehalt, hochgradig reaktionsfreudige Eigenschaften sowie ihre Porosität und Struktur, wodurch die Holzkohle wertvoll und vielseitig verwendbar ist. Holzkohle spielt bei der Produktion von Schwarzpulver in der Pyrotechnik, als Brennstoff beim Grillen, als sogenannte Aktivkohle in Wasserfiltern, zum Klären verschiedener Flüssigkeiten (wie hochprozentige Spirituosen), als Desinfektionsmittel, als Zeichenkohle sowie als Bestandteil von Tusche eine bedeutende Rolle. Aktivkohle findet auch in der Human- und Veterinärmedizin Verwendung, um als Bestandteil von Kohletabletten Toxine aus dem Verdauungstrakt zu filtern und somit Durchfallerkrankungen und Vergiftungen auf sanfte Weise zu behandeln. In der Lebensmittelindustrie wird Holzkohle unter der Bezeichnung E 153 als Farbstoff eingesetzt, um Süßwaren, Überzüge und Konzentrate zu färben.

Im Rahmen der Erfindung ist es bevorzugt, wenn die Abwärme der Holzkohle nach der Entnahme einem Wärmeverbraucher zugeführt und insbesondere zum Trocknen der Biomasse dient, welche in die Pyrolyseeinheit eingebracht wird. Dabei kann im Rahmen der Erfindung vorzugsweise vorgesehen sein, dass die Holzkohle nach der Trennung vom Schwelgas gekühlt wird, insbesondere durch eine mit einem Kühlmedium, vorzugsweise Wasser, beschickte Transporteinheit gekühlt wird, und dass die somit aufgenommene Abwärme des Kühlmediums einem Wärmeverbraucher zugeführt wird.

Zur Fortsetzung der Vergasung - nach der Pyrolyse und getrennt von der Holzkohle - verbleibt im weiteren Verfahren nur mehr der schwer behandelbare und nicht immer chemisch leicht beherrschbare Teil als Schwelgas. Es ist gerade dieser Masseteil der Summe von Pyrolysegesamtprodukten, welcher die eigentliche Ursache für rigorose chemische und technische Verfahrensschritte bei den bislang bekannten Nicht-Großanlagen bildet.

Ein Vorteil der Trennung von Holzkohle und Gas liegt zum einen darin, dass das Schwelgas ohne Pyrolysereststoffe im Weiteren leichter behandelt werden kann, wobei insbesondere die chemische Umsetzung des Schwelgases in ein angestrebt höherwertiges Synthesegas leichter beherrschbar wird. Zum anderen liegt ein Vorteil darin, dass die Anlage für die weitere Behandlung des Schwelgases im Reaktor selbst sowie auch für notwendige nachfolgend angeordnete Aggregate um den äquivalenten Teil der bereits entnommenen Holzkohlemenge geringer dimensioniert werden kann.

Weiters wird durch den wesentlich reduzierten Teil des Massestroms zum Aufheizen des Schwelgases im Reaktor wiederum mit Hilfe von Luftsauerstoff eine geringere Luftmenge benötigt. Demzufolge gelangt auch weniger (Luft-)Stickstoff in den Prozess, was im Gegensatz zu bekannten Verfahren eine geringere Fracht an Stickstoff (NOₓ-bildend) im Gas bewirkt und nach einem späteren Verbrennungsprozess des Gases weniger Luftverunreinigungen hervorruft.

Im Rahmen der Erfindung kann vorgesehen sein, dass dem Verbrennungsprozess in der (ersten) Pyrolyseeinheit zur Erreichung der Pyrolysetemperatur eine Sauerstoffquelle, insbesondere Luft, zugeführt wird, wobei die Zufuhr in die Pyrolyseeinheit in Abhängigkeit von der Pyrolysetemperatur geregelt wird. Dies ist insbesondere deshalb von Vorteil, da die Pyrolysetemperatur Einfluss auf die Qualität und Zusammensetzung sowohl der Holzkohle als auch des Schwelgases hat. Hierbei ist zu berücksichtigen, dass sich eine höhere Pyrolysetemperatur positiv auf die Gasqualität aber negativ auf die Qualität, insbesondere auf den Heizwert der Holzkohle auswirkt. Eine niedrigere Pyrolysetemperatur wirkt sich dagegen positiv auf die Qualität und auf den Heizwert der Holzkohle und negativ auf die Gasqualität aus.

Vorzugsweise wird eine weitere Verbesserung der Gasqualität erreicht, wenn anstelle von Luftsauerstoff ein in einer Elektrolyse erzeugter, mehr oder weniger reiner Sauerstoff in der Pyrolyseeinheit und/oder zum Aufheizen des Schwelgases im Reaktor in entsprechender Menge eingesetzt wird. Die Bildung des das Gas verunreinigenden NOₓ wird damit vermieden.

Der Einsatz einer Elektrolyse zur Gewinnung von (mehr oder weniger) reinem Sauerstoff ist mit einem weiteren Vorteil verbunden. Der bei der Elektrolyse entstehende Wasserstoff kann vor der Anwendung des Gases z.B. in einer Verbrennungskraftmaschine (BHKW) beigemischt werden. Durch die Zugabe des Wasserstoffes mit dessen hohem Heizwert wird die zur Verbrennung anstehende Synthesegasqualität wesentlich erhöht. Es stellt sich der Erfolg ein, dass damit die bei dem erfindungsgemäßen Gesamtsystem gewonnene Gasmenge für eine gleiche Leistung einer Verbrennungskraftmaschine geringer sein kann.

Es hat sich gezeigt, dass bei einer Pyrolysetemperatur von ca. 850 °C bzw. etwas unter 850 °C sowohl eine gewünschte Qualität der Holzkohle als auch des Schwelgases erzielt werden kann. Im Rahmen der Erfindung ist es daher bevorzugt, dass die Pyrolyse bei einer Pyrolysetemperatur von ca. 600 oder 700 - 900 °C, vorzugsweise bei ca. 800 - 850 °C, stattfindet.

Sofern im Rahmen der Erfindung die Energiequelle zur Pyrolyse-Temperaturvorgabe über eine Sauerstoff- bzw. Luftzufuhr in die Pyrolyseeinheit erfolgt, so kann dies über eine einwandige Pyrolyseeinheit und dortiger Verbrennung geschehen.

Alternativ dazu kann vorgesehen sein, dass eine doppelwandige Pyrolyseeinheit verwendet wird und dass Synthesegas vom Reaktor in den durch den Doppelmantel gebildeten Raum geleitet wird, um das Innere der Pyrolyseeinheit auf die oben beschriebene Pyrolysetemperatur bzw. zum Annähern auf die Pyrolysetemperatur aufzuheizen. Dies ist insbesondere deshalb von Vorteil, da die Energieeffizienz der gesamten Anlage durch Wärmerückgewinnung gesteigert wird.

Die in der Pyrolyseeinheit produzierte Holzkohle entspricht im Wesentlichen der Qualität der in Holzkohlemeilern produzierten Ware. Es wird lediglich ein etwas geringerer Heizwert nachzuweisen sein, welcher damit begründbar ist, dass die Verkohlung nicht wie in den Meilern bei bis zu maximal 500 °C erfolgt, sondern die Entgasungstemperatur bei der Pyrolyse zum Zeitpunkt der Entnahme der Holzkohle vorzugsweise um die 850 °C oder etwas niedriger liegt.

Die Gewinnung der Holzkohle als hochwertiges und vielfach verwendbares Produkt stellt einen wesentlichen Hauptbestandteil der Erfindung dar.

Nach der Entnahme der Holzkohle aus der Pyrolyseeinheit verbleiben im Prozess Schwelgas und einige Nebenprodukte. Hauptbestandteile des unter Luftabschluss (die oben genannte Sauerstoffzufuhr dient nur dazu, die Pyrolysetemperatur zu erreichen) entstehenden Schwelgases sind als Permanentanteile Kohlenstoffdioxid, Kohlenstoffmonoxid, Methan und Ethan sowie Wasserstoff und Wasserdampf in kleineren Konzentrationen sowie, nicht gasförmig, Holzteere. Auch wird man einen minimalen Staubanteil nicht oder nur schwer vermeiden können. Als maßgebliche Einflussfaktoren auf die Qualität und die Zusammensetzung des Gases gelten die Pyrolysetemperatur, die Feuchtigkeit und Größe der eingesetzten Biomasse, insbesondere Holzschnitzel, sowie zu einem gewissen Teil auch die Holzart.

Neben den Permanentgasanteilen sind vor allem der Anteil und die chemische Beherrschung von Benzol- und Teerkonzentrationen wichtige Kerngrößen für die Beurteilung eines erfolgreichen Vergasungsprozesses. Zudem sind Benzol und vor allem Benzo[α]pyren wichtige Parameter zur Emissionsbeurteilung von Abgasen in Holzblockheizkraftwerken. Die zum Teil langkettigen Kohlenwasserstoffe würden für die weitere Behandlung von Schwelgas Probleminhaltsstoffe darstellen.

Es ist ein wesentlicher Hauptbestandteil der Erfindung, sauberes und hochwertiges Synthesegas aus dem Probleminhaltsstoffe aufweisenden Schwelgas herzustellen.

In einer besonders vorteilhaften Ausführungsform der Erfindung ist vorgesehen, dass Schwelgas in eine Brennkammer des Reaktors (Gaswandlers) geleitet und bei Eintritt in die Brennkammer mit einer Sauerstoffquelle, insbesondere Luft, soweit aufgeheizt wird, wobei Spaltgas entsteht. Die Luftzufuhr wird vorzugsweise derart geregelt, dass durch unterstöchiometrische Teilverbrennung eine Reaktortemperatur von jedenfalls über 1.000 °C, insbesondere bis ca. 1.200 °C, erreicht wird. Diese radikale Erwärmung bewirkt neben den aus dem Wasserdampf gewonnenen Elementen eine Anreicherung des Gases mit gut brennbarem Kohlenstoff und Wasserstoff wie auch eine Aufspaltung (Mengenreduktion) der zum Teil langkettigen Kohlenwasserstoffe als Probleminhaltsstoffe.

Im Rahmen der Erfindung ist vorzugsweise vorgesehen, dass das Spaltgas im Reaktor durch die glühende Kohlenstoffquelle, insbesondere durch ein glühendes Kohlebett, geführt und zu Synthesegas als energetisch nutzbares Produkt aufbereitet wird. Hierzu kann das aufgeheizte Schwelgas als Spaltgas mit einer Verweilzeit von ca. ½ Sekunde oder gering länger durch die glühende Kohlenstoffquelle strömt. Dieser Vorgang dient der Restentstaubung sowie der "Aufkohlung" des Gases durch die Reaktion des noch immer in geringen Mengen vorhandenen Wasserdampfs mit dem Kohlenstoff der Kohlenstoffquelle. Der bis dahin im Gasstrom enthaltene, die energetische Effizienz beim Verbrennen eines Gases behindernde Wasserdampfanteil geht in diesem chemischen Prozess zu einem großen Teil auf. Es entsteht ein Synthesegas.

Durch die Verminderung des Anteils an Wasserdampf und die Vermehrung gut brennbarer Teile, wie Kohlenstoff (als Kohlenstoffmonoxid) und Wasserstoff, in diesem Gas wird der Heizwert des Synthesegases wesentlich erhöht. Zudem ist somit die Gasmenge und -qualität über eine entsprechende Zusatzmenge an Wasserdampf zur chemischen Reaktion mit der Kohlenstoffquelle steuerbar.

Die hohe Temperatur im Reaktor (Gaswandler) sowie in der glühenden Kohlenstoffquelle bewirken auch eine Reduzierung der Ammoniak-Bildung sowie eine Beeinflussung der Ascheverflüchtigung (Kalium-Aerosole) wesentlich. Es werden Entstaubungsbedingungen geschaffen, durch welche die Abscheideeffizienz für Aerosole erhöht wird.

Die Zusammensetzung und Qualität des aus der Pyrolyseeinheit austretenden Schwelgases ist abhängig vom Ausgangsstoff "Biomasse" nicht immer gleich (z.B. durch Harze in der Biomasse und durch verschiedene Holzarten bzw. durch andere Verunreinigungen). Solche Unterschiede im Schwelgas können durch das Führen des Gasstroms durch die glühende Kohlenstoffquelle ausgeglichen werden, um ein Synthesegas mit annähernd einheitlicher Qualität herzustellen.

Das erfindungsgemäß hergestellte Synthesegas enthält beim Verlassen der glühenden Kohlenstoffquelle explizit mehr chemische Energie als beim Eintritt. Die Gastemperatur sinkt dabei auf weniger als 900 °C bis 850 °C ab.

Die Zufuhr von Kohlenstoff in die dort auch als Sieb fungierende glühende Kohlenstoffquelle im Reaktor, insbesondere die Zufuhr von Koks in ein glühendes Kohlebett, arbeitet kontinuierlich. Das verunreinigte Kohlenstoffmaterial, insbesondere Koks, wird nach dem Austrag aus dem Reaktor gewaschen und erneut dem Reaktor, insbesondere dem Koksbett, zugeführt. Zudem kann im Rahmen der Erfindung vorgesehen sein, dass die Wärme des aus dem Reaktor geschleusten, insbesondere kontinuierlich entnommenen heißen Kohlenstoffmaterials zusätzlich in Wärmetauschern aufgebracht und die so gewonnene Energie einem Wärmeverbraucher zugeführt wird, insbesondere zum Trocknen der Biomasse, die den Ausgangsstoff für die Pyrolyseeinheit bildet, verwendet wird. Diese Abwärme kann auch anderweitig verwendet werden. Doch ist es bevorzugt, wenn die entnommene Kohlenstoffquelle insbesondere durch eine mit einem Kühlmedium beschickte Transporteinheit gekühlt wird und dass die somit aufgenommene Abwärme des Kühlmediums einem Wärmeverbraucher zugeführt wird.

Eine weitere Verbesserung der Gasqualität kann erzielt werden, wenn anstelle von Koks als Kohlenstoffquelle hochkohlenstoffhaltige Energieträger wie Magerkohle, Anthrazit oder Graphit verwendet werden, da dann das Synthesegas chemisch mit mehr Kohlenstoffanteilen aufgerüstet wäre und der im Koks vorhandene, geringe Anteil an Schwefel gesenkt werden könnte.

In einer bevorzugten Ausführungsform der Erfindung ist vorgesehen, dass das Synthesegas nach dem Reaktor in einem Gaskühler gekühlt und in einem Gaswäscher gewaschen wird. Insbesondere kann vorgesehen sein, dass das Synthesegas nach dem Reaktor in den durch den Doppelmantel gebildeten Raum der Pyrolyseeinheit und anschließend in den Gaskühler geführt wird. Auf den Betrieb eines Heißgasfilters für das Synthesegas nach dem Reaktor kann im Rahmen der Erfindung verzichtet werden, wenn die zur Pyrolyse eingebrachte Biomasse gewisse Eigenschaften aufweist und chemisch nicht verunreinigt zur Verfügung steht.

Erfindungsgemäß werden hochwertige und verschieden einsetzbare Produkte, wie Holzkohle und Synthesegas hergestellt. Gleichzeitig wird durch die Erhöhung der Reinheit und der Qualität des Synthesegases sowie über dessen im Reaktor (Gaswandler) erzielten Energiegewinn gegenüber den bekannten Pyrolysegasen aus Biomasse eine wesentliche Verbesserung für die energetische Leistung in Blockheizkraftwerken sowohl in thermischer als auch in elektrischer Hinsicht erreicht. Das heißt aber auch, dass mit einer geringeren Menge an gleichwertiger Biomasse in der Gesamtenergieausbeute ähnliche Endleistungen zu den bisher bekannten Pyrolyseanlagen erreicht werden können.

Weitere Einzelheiten, Merkmale und Vorteile der Erfindung ergeben sich aus den angeschlossenen Zeichnungen. Es zeigt:
- Fig. 1: eine erste Ausführungsform einer erfindungsgemäßen Anlage,
- Fig. 2: eine zweite Ausführungsform einer erfindungsgemäßen Anlage,
- Fig. 3: einen Teilbereich einer erfindungsgemäßen Anlage mit einer einwandigen Pyrolyseeinheit,
- Fig. 4: einen Teilbereich einer erfindungsgemäßen Anlage mit einer doppelwandigen Pyrolyseeinheit und
- Fig. 5: eine Übersicht über die temperaturabhängige Bildung von Teeren in einem erfindungsgemäßen Verfahren.

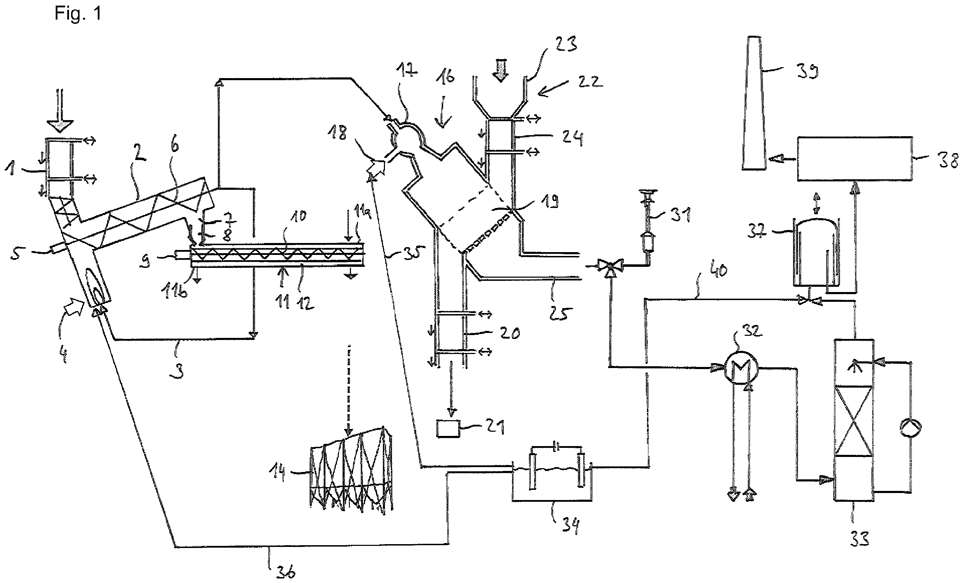

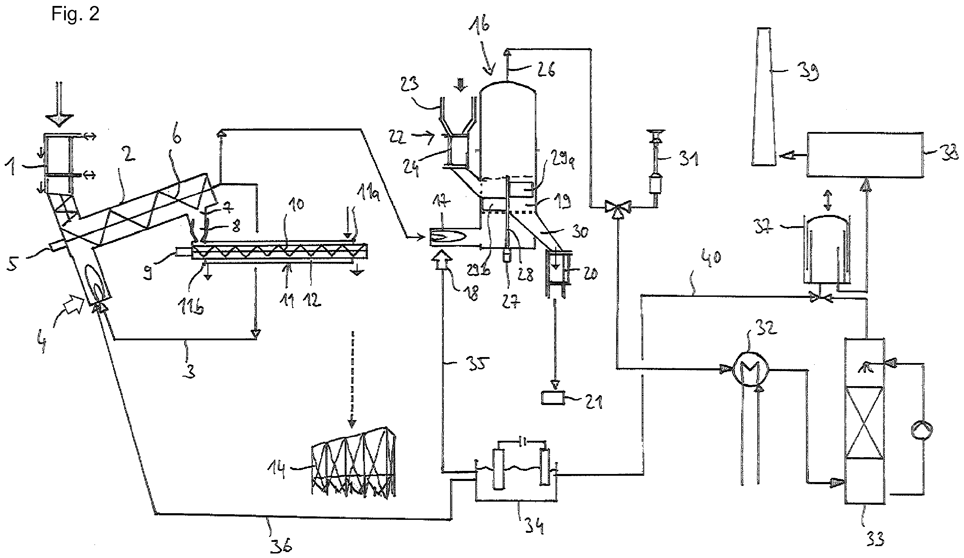

In den Figuren 1 und 2 sind Ausführungsformen von Anlagen zur Energiegewinnung sowie entsprechende Anlagenteile gezeigt, mit denen durch pyrolytische (thermochemische) Umwandlung von forstlicher Biomasse und anderen kohlenstoffhaltigen Energieträgern der Natur ein Synthesegas hergestellt werden kann, wobei auch die Gewinnung von Holzkohle als Heizwertspeicher und als Produkt für verschiedene Verwendungen durch eine technische Trennung vom Prozess der Synthesegaserzeugung im Vordergrund steht.

Dazu wird forstliche Biomasse in bereits getrocknetem Zustand, beispielsweise mit einem Wassergehalt von bis zu maximal 15 % über eine Schleuse 1 in eine vorzugsweise schräg gelagerte Pyrolyseeinheit 2 eingebracht. Dort wird ein Pyrolyseprozess als Entgasungsprozess eingeleitet, der vorzugsweise bei einer Temperatur stattfindet, die einerseits als Produkt noch eine als hochwertig zu bezeichnende Holzkohle und andererseits ein Schwelgas in guter Qualität und Zusammensetzung für den weiteren Prozessverlauf hervorbringt. Die Pyrolysetemperatur kann zwischen 600 bis 900 °C, vorzugsweise bei 800 bis 850 °C liegen.

In den dargestellten Ausführungsformen wird die für den Pyrolysevorgang erforderliche Wärmeenergie über eine Gaszuführung 3 von bereits im System vorhandenen Pyrolysegas durch Verbrennung unter teilweisem Luftabschluss erzeugt. Um eine gänzliche Verbrennung (Oxidation) des zu entgasenden Materials zu verhindern, wird über eine nur jene Menge an Luft (Sauerstoff) über eine Luftzuführung 4 zugeführt und verbrannt, die für das Erreichen der für den Pyrolyseprozess benötigten Temperatur ausreicht.

Die schräg gelagerte, zylindrische Pyrolyseeinheit 2 weist eine von einem außenliegenden Getriebe 5 angetriebene schneckenartige Fördereinrichtung 6 auf, über die das eingebrachte Material nach der Schleuse 1 während des Entgasungsvorganges schräg nach oben transportiert wird. Während des Vorganges in der Pyrolyseeinheit 2 entstehen aufgrund der hohen Erwärmung und thermischen Zersetzung im Wesentlichen Schwelgas und Holzkohle. Als Hauptgase entstehen CO, CO₂, H₂, CH₄ und Wasserdampf.

Ein Stück vor dem oberen Ende der zylindrischen Pyrolyseeinheit 2 befindet sich an deren Unterseite eine Öffnung, aus welcher die Holzkohle aufgrund Ihres Eigengewichtes aus der Pyrolyseeinheit 2 herausfällt. In den dargestellten Ausführungsformen fällt die Holzkohle in eine fest mit der Pyrolyseeinheit 2 verbundene, kegelstumpfähnliche Trichtervorrichtung 7, welche mit einer weiteren Schleuse 8 in Verbindung stehen kann, die zum einen den Austritt von Schwelgas aus der Pyrolyseeinheit 2 und zum anderen der Eintritt von Luft in die Pyrolyseeinheit 2 verhindert. Nach dieser weiteren Schleuse 8 wird die Holzkohle über eine zylindrisch geformte und mit einer von einem außenliegenden Getriebe 9 angetriebene Transportschnecke 10 versehene, Transporteinheit 11 mit Doppelmantel 12 weiter transportiert. Die doppelwandige Einrichtung dient der Abkühlung der heißen Holzkohle. Im Hohlraum des Doppelmantels 12 wird an einem Ende 11a der Transporteinheit 11 entgegen der Transportrichtung der Holzkohle Wasser eingeleitet, welches zirkulierend am anderen Ende 11b der Transporteinheit 11 ausgeleitet wird. Das somit mit Wärmeenergie versehene Wasser kann einem Wärmeverbraucher zugeleitet und nach Abgabe der Wärme wieder zurück in den Doppelmantel 12 der Transporteinheit 11 geleitet werden. Beispielsweise kann diese Wärmeenergie zum Trocknen der Biomasse verwendet werden.

Vorzugsweise kann die Transportschnecke 10 mit einer hohlen Antriebswelle ausgestattet sein, welche ebenfalls mit Kühlwasser beschickt ist und somit eine zusätzliche Abkühlung der Holzkohle bewirkt. Für eine weiter verbesserte Kühlwirkung können auch mehrere Transporteinheiten 11 vorgesehen sein. Die abgekühlte Holzkohle kann nach der Transporteinheit 11 in geeignete Verpackungen 14 verpackt, beispielsweise in sogenannte BigBags, werden.

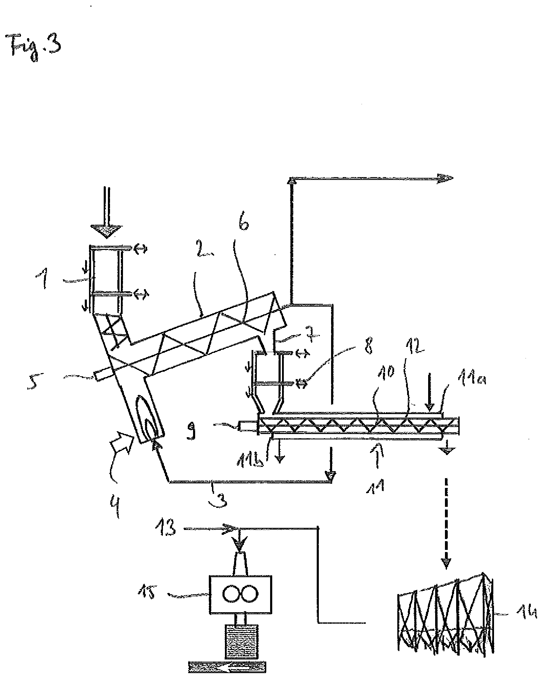

Wie in Fig. 3 gezeigt, kann die entnommene Holzkohle gegebenenfalls unter Zusatz 13 von energetischem Zusatzmaterialien und/oder von biogener Stärke in einer Presse 15 gepresst werden, wodurch Grillkohle-Briketts entstehen.

Das Schwelgas wird nach der Pyrolyseeinheit 2 einem Reaktor 16 (Gaswandler) zugeführt.

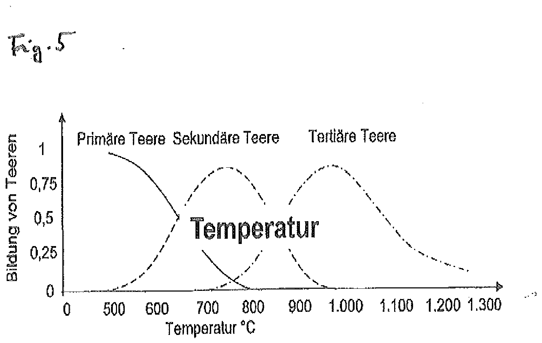

In der in Fig. 1 gezeigten Ausführungsform ist der Reaktor 16 schräg nach unten geneigt. Im oberen Bereich des Reaktors 16 ist eine Brennkammer 17 vorgesehen, in welche das Schwelgaseintritt und thermisch weiterbehandelt wird. Durch das dosierte Eindüsen einer Sauerstoffquelle, insbesondere Luft, in die Brennkammer 17 mittels einer Düse 18 wird das Gas auf eine Temperatur von ca. 1200 °C gebracht, wobei das Gas anschließend über den Reaktor 16 ausweicht. Bei diesen hohen Temperaturen spalten sich die bis dahin noch im Gas befindlichen langkettigen Kohlenwasserstoffe und andere Probleminhaltsstoffe, zum Beispiel Teere (vgl. Fig. 5) und Benzole, auf und reagieren sowohl chemisch untereinander als auch mit Teilen des vorhandenen Wasserdampfs.

Nach dieser Reaktionsperiode wird das Gas durch eine glühende Kohlenstoffquelle 19, in diesem Fall ein glühendes Kohlebett, geleitet. Hierbei werden die noch immer vorhandenen Problemstoffe im Gas weiter reduziert. Die Kohlenstoffquelle 19 dient gleichzeitig als Filter. Auch geht der restliche im Gas vorhandene Wasserdampf fast gänzlich eine chemische Reaktion mit dem in der glühenden Kohlenstoffquelle 19 vorhandenen Kohlenstoff ein. Es findet eine "Aufkohlung" statt: Durch die Aufspaltung von Wasser in Dampfform bei der Reaktion mit dem Kohlenstoff [C + H₂O → CO + H₂] wird das Gas mit hochwertig brennbaren Elementen ergänzt. Es entsteht ein Synthesegas mit einem wesentlich höheren Heizwert als jenem, der von Gasen bisher bekannter Klein-Pyrolyseanlagen bekannt ist. Großanlagen arbeiten im Gegensatz dazu mit sehr großem chemischen Aufwand und vielen Zusatzstoffen, um eine vergleichbare Synthesegasqualität zu erreichen.

Die Kohlenstoffquelle 19 im Reaktor bzw. das Kohlenstoffbett ist 16 vorzugsweise schräg eingesetzt, so dass die Bewegung der Kohlenstoffquelle und deren Bewegungsrichtung durch den Reaktor 16 durch Schwerkraft bestimmt wird. Die eingesetzte Kohlenstoffquelle, insbesondere Kohle, vorzugsweise Koks, bewegt sich langsam in einem Kreislauf um das Kohlenstoffbett im Reaktor 16. Nach dem Reaktor 16 befindet sich eine Schleuse 20, durch welche die Kohlenstoffquelle aus dem Reaktor 16 geführt wird. Die im Kohlenstoffbett angesammelten Verunreinigungen werden anschließend in einem Wäscher 21 mit Wasser ausgewaschen und der gewaschene Kohlenstoff wird wieder in den Kreislauf gebracht, indem er ergänzt mit durch Schwund (Kohlenstoffreaktion) verlorene Substanz an eine Einfüllvorrichtung 22 transportiert wird. Die Einfüllvorrichtung 22 ist im gezeigten Ausführungsbeispiel anfänglich trichterförmig und nachfolgend rohrförmig ausgebildet und verfügt zwischen dem Einfülltrichter 23 und dem Kohlenstoffbett im Reaktor 16 im Abstand zu diesem wiederum eine Schleuse 24, die ungewollte Gas- und Luftbewegungen aus dem Reaktor 16 bzw. in den Reaktor 16 verhindert.

Zwischen der Schleuse 20 und dem Wäscher 21 kann die entnommene Kohlenstoffquelle auch einer Transporteinheit zugeführt werden. Diese Transporteinheit kann wie die Transporteinheit 11 zum Transportieren der aus der Pyrolyseeinheit 2 entnommenen Holzkohle aufgebaut sein und kann auch demgemäß wirken. Somit kann der aus dem Kohlenstoffbett entnommene Kohlenstoff vor dem Einbringen in den Wäscher 21 gekühlt werden, wobei die derart übertragene Abwärme einem Wärmeverbraucher, beispielsweise einem Trockner für Biomasse, zugeführt werden kann.

Das entstandene Synthesegas tritt nach dem Durchströmen der glühenden Kohlenstoffquelle 19 an einem unteren Ende 25 des Reaktors 16 mit einer Temperatur von 850 bis 950 °C aus.

Die in der in Fig. 2 gezeigte Ausführungsform unterscheidet sich von der in Fig. 1 gezeigten Ausführungsform darin, dass der Reaktor 16 eine aufrecht stehende Konstruktion hat. Bei dieser Variante befindet sich die Brennkammer 17 am unteren Ende des zylindrisch geformten Reaktors, wobei das eingeleitete Schwelgas wiederum durch entsprechend gesteuerte Luftzufuhr auf die gewünschte Temperatur erhitzt wird. Das Gas wird nach oben durch die glühende Kohlenstoffquelle 19 geführt und strömt am oberen Ende 26 des Reaktors 16 mit einer Temperatur von 850 bis 950 °C aus.

Die Kohlenstoffquelle wird in dieser Ausführungsform seitlich über die Einfüllvorrichtung 22 in das Kohlenstoffbett im Reaktor 16 eingebracht, wobei wiederum eine Schleuse 24, die ungewollte Gas- und Luftbewegungen aus dem Reaktor 16 bzw. in den Reaktor 16 verhindert, vorgesehen ist. Die Verteilung im und der Austrag aus dem Kohlenstoffbett erfolgt über zwei rotierende, von einem außenliegenden Getriebe 27 angetriebene Wellen 28, vorzugsweise ausgebildet als Doppelachsenwelle, die jeweils wenigstens einen entsprechend geformten, insbesondere gekrümmten, Verteilerfinger 29a, 29b aufweisen. Die Verteilerfinger 29a, 29b sind übereinander angeordnet und mit der jeweiligen Welle 28 fest verbunden. Durch die Drehbewegung des oberen Verteilerfingers 29a wird die neu durch Schwerkraft von außen eingebrachte Kohlenstoffquelle gleichmäßig über die gesamte Fläche des Reaktors 16 verteilt. Durch die Drehbewegung des unteren Verteilerfingers 29b wird die verunreinigte und verbrauchte Kohlenstoffquelle aus dem Reaktor 16 ausgebracht, indem dieses Material durch einen Schlitz fällt. Über diesen Schlitz fällt das Material durch einen Behälter 30 bis zur Schleuse 20 und wird somit vom unmittelbaren Vergasungsprozess getrennt. Das material kann dann wie zur Fig. 1 beschrieben einem Wäscher 21 einer Transporteinheit zur Wärmeübertragung oder direkt einem Wäscher 21 zugeführt werden.

Selbstverständlich ist es bei einer stehenden Konstruktion des Reaktors 16 auch möglich, den Gasfluss umzukehren, indem das Schwelgas oben in den Reaktor 16 eintritt.

Den beschriebenen Reaktoren 16 liegt Gleiches zu Grunde: Das Synthesegas verlässt den Reaktor 16 nach dem Kohlenstoffbett gereinigt mit einer Temperatur von 850 bis 900 °C. Durch das Kohlenstoffbett wird es möglich, die Notwendigkeit einer Investition für einen dem Reaktor 16 üblicherweise anschließenden Gasfilter zu vernachlässigen. In diesem Fall wird das Gas - neben einer Abzweigung zu einer vorzusehenden Notfackel 31 für möglich Störfälle - zu einem Gaskühler 32 und einem Gaswäscher 33 geführt. Vorzugsweise wird das Gas als energetisch nutzbares Produkt mit einer maximal energetisch verwertbaren Temperatur geleitet. Das Gas kann in einem Gaszwischenspeicher 37 gespeichert werden, bevor es in einer Verbrennungskraftmaschine 38 (BHKW) in elektrische wie auch thermische Energie umgewandelt wird. Die dabei entstehenden Abgase bedürfen keiner weiteren Reinigung und werden über einen Kamin 39 ins Freie geleitet.

Gemäß den Fig. 1 und 2 ist ein Mittel 34 zum Durchführen einer Elektrolyse von Wasser vorgesehen, welche Sauerstoff und Wasserstoff erzeugt. Der mittels Elektrolyse gewonnene Sauerstoff kann zusätzlich oder alternativ zu Luftsauersoff verwendet werden. Hierfür ist eine Sauerstoffleitung 35 vorgesehen, die vom Mittel 34 zum Durchführen der Elektrolyse zur Brennkammer 17 des Reaktors 16, insbesondere zur Düse 18 führt. Alternativ oder zusätzlich dazu kann eine weitere Sauerstoffleitung 36 vorgesehen sein, die vom Mittel 34 zum Durchführen der Elektrolyse zur Pyrolyseeinheit 2 führt, wobei die weitere Sauerstoffleitung 36 mit der Luftzuführung 4 gekoppelt sein oder diese ersetzen kann. Alternativ oder zusätzlich dazu kann eine Wasserstoffleitung 40 vorgesehen sein, die vom Mittel 34 zum Durchführen einer Elektrolyse bis zum Gaszwischenspeicher 37 führt.

Die Verwendung von durch Elektrolyse erzeugtem Sauerstoff ist in mehrere Hinsichten besonders vorteilhaft. Zum einen können höheren Temperaturen erreicht werden, so dass neben forstlicher Biomasse eine größere Auswahl an geeigneten energetisch nutzbaren biogenen Stoffen verarbeitet werden kann. Zum anderen entsteht bei der Verwendung von reinem Sauerstoff kein NOₓ, das besonders umweltschädlich wirkt. Somit unterscheidet sich das erfindungsgemäße Verfahren und die erfindungsgemäße Anlage weiterhin wesentlich von bekannten Verfahren bzw. Anlagen.

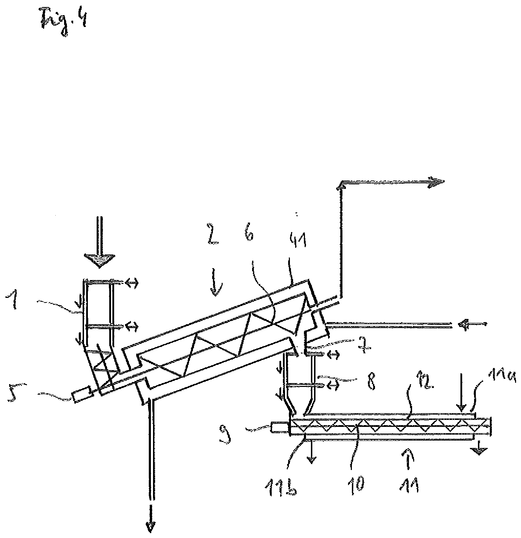

Bei den in den Fig. 1 bis 3 dargestellten Ausführungsformen wird eine einwandige Pyrolyseeinheit 2 verwendet. Alternativ dazu kann auch eine in Fig. 4 gezeigte doppelwandige Pyrolyseeinheit 2 verwendet werden, wobei Synthesegas vom Reaktor 16 mit einer Temperatur von 850 bis 900 °C in den durch den Doppelmantel 41 gebildeten Raum geleitet wird, um das Innere der Pyrolyseeinheit 2 auf die Pyrolysetemperatur bzw. zum Annähern auf die Pyrolysetemperatur aufzuheizen. Nach Verlassen des Doppelmantels 41 kann das Gas dann wie oben beschrieben zu einem Gaskühler 32 und einem Gaswäscher 33 geführt werden.

Bei Ausführungsformen, bei welchen kein Synthesegas in den Doppelmantel 41 der Pyrolyseeinheit 2 geführt wird, ist ein Startbrenner in der Pyrolyseeinheit 2 vorgesehen. Bei Ausführungsformen, bei welchen Synthesegas in den Doppelmantel 41 der Pyrolyseeinheit 2 geführt wird, ist ein Startbrenner in der Brennkammer 17 des Reaktors 16 vorgesehen.

## Patentansprüche

1. Verfahren zum Betreiben einer Anlage zur Energiegewinnung, wobei Biomasse als Ausgangsstoff in einem gestuften Vergasungsverfahren, insbesondere in einem 2-stufigen Vergasungsverfahren, in wenigstens ein energetisch nutzbares Produkt umgewandelt wird, wobei in einem Schritt eine Pyrolyse stattfindet und ein Pyrolyseprodukt in einem weiteren Schritt einem Reaktor (16) zugeführt wird, **dadurch gekennzeichnet, dass** die Biomasse in einer Pyrolyseeinheit (2) teilentgast und unter Entstehung von Schwelgas zu Holzkohle umgewandelt wird, dass die Holzkohle vom Schwelgas getrennt wird und dass das Schwelgas dem Reaktor (16) zugeführt wird, wobei der Gasstrom im Reaktor (16) erhitzt und durch eine glühende Kohlenstoffquelle (19) geführt und zu Synthesegas aufbereitet wird.

2. Verfahren nach Anspruch 1, **dadurch gekennzeichnet, dass** Holzkohle der Pyrolyseeinheit (2) entnommen wird.

3. Verfahren nach Anspruch 1 oder 2, **dadurch gekennzeichnet, dass** die Abwärme der Holzkohle einem Wärmeverbraucher zugeführt, insbesondere zum Trocknen der Biomasse, welche in die Pyrolyseeinheit (2) eingebracht wird, verwendet wird, vorzugsweise dass die Holzkohle nach der Trennung vom Schwelgas gekühlt wird, insbesondere durch eine mit einem Kühlmedium beschickte Transporteinheit (11) gekühlt wird, und dass die somit aufgenommene Abwärme des Kühlmediums einem Wärmeverbraucher zugeführt wird.

4. Verfahren nach einem der Ansprüche 1 bis 3, **dadurch gekennzeichnet, dass** der Pyrolyseeinheit (2) eine Sauerstoffquelle, insbesondere Luft und/oder durch Elektrolyse erzeugter Sauerstoff, zugeführt wird, wobei die Zufuhr in die Pyrolyseeinheit (2) in Abhängigkeit von der Pyrolysetemperatur geregelt wird und wobei vorzugsweise eine einwandige Pyrolyseeinheit (2) verwendet wird.

5. Verfahren nach einem der Ansprüche 1 bis 3, **dadurch gekennzeichnet, dass** eine doppelwandige Pyrolyseeinheit (2) verwendet wird und dass Synthesegas vom Reaktor (16) in den durch den Doppelmantel (41) gebildeten Raum geleitet wird, um das Innere der Pyrolyseeinheit (2) auf Pyrolysetemperatur bzw. zum Annähern auf die Pyrolysetemperatur aufzuheizen.

6. Verfahren nach einem der Ansprüche 1 bis 5, **dadurch gekennzeichnet, dass** Schwelgas in eine Brennkammer (17) des Reaktors (16) geleitet und mit einer Sauerstoffquelle, insbesondere Luft und/oder durch Elektrolyse erzeugter Sauerstoff, vermischt wird, wobei Spaltgas entsteht und wobei die Zufuhr der Sauerstoffquelle vorzugsweise derart geregelt wird, dass durch unterstöchiometrische Teilverbrennung eine Reaktortemperatur von über 1.000 °C, insbesondere bis ca. 1.200 °C, erreicht wird.

7. Verfahren nach Anspruch 6, **dadurch gekennzeichnet, dass** das Spaltgas im Reaktor (16) durch die glühende Kohlenstoffquelle (19), insbesondere durch ein glühendes Kohlebett, geführt und zu Synthesegas als energetisch nutzbares Produkt aufbereitet wird.

8. Verfahren nach einem der Ansprüche 1 bis 7, **dadurch gekennzeichnet, dass** die glühende Kohlenstoffquelle (19) aus dem Reaktor (16) entnommen wird, insbesondere kontinuierlich entnommen wird, und deren Abwärme insbesondere über ein Wasserkühlbett für einen Wärmebedarf der Anlage, insbesondere zum Trocknen der Biomasse, welche in die Pyrolyseeinheit (2) eingebracht wird, verwendet wird, wobei vorzugsweise die entnommene Kohlenstoffquelle gekühlt wird, insbesondere durch eine mit einem Kühlmedium beschickte Transporteinheit gekühlt wird und die somit aufgenommene Abwärme des Kühlmediums einem Wärmeverbraucher zugeführt wird.

9. Anlage zur Energiegewinnung aus Biomasse mit wenigstens zwei Vergasungsstufen (2, 16), in denen Biomasse in wenigstens ein energetisch nutzbares Produkt umwandelbar ist, wobei eine erste Vergasungsstufe eine Pyrolyseeinheit (2) und eine weitere Vergasungsstufe einen Reaktor (16), insbesondere einen Gaswandler, aufweist, **dadurch gekennzeichnet, dass** die Pyrolyseeinheit (2) derart steuerbar ist, dass die Biomasse teilentgast und unter Entstehung von Schwelgas zu Holzkohle umwandelbar ist, dass die Pyrolyseeinheit (2) Einrichtungen zum Trennen der Holzkohle vom Schwelgas aufweist, dass eine Leitung von der Pyrolyseeinheit (2) zum Reaktor (16) vorgesehen ist, über welche das Schwelgas dem Reaktor (16) zuführbar ist, und dass der Reaktor (16) in Richtung der Gasströmung gesehen eine Brennkammer (17) und danach eine glühende Kohlenstoffquelle (19) aufweist.

10. Anlage nach Anspruch 9, **dadurch gekennzeichnet, dass** die Pyrolyseeinheit (2) eine Entnahmevorrichtung für Holzkohle aufweist.

11. Anlage nach Anspruch 9 oder 10, **dadurch gekennzeichnet, dass** sie einen Wärmetauscher für die entnommene Holzkohle, insbesondere eine Transportvorrichtung (11) mit einem Kühlmedium, aufweist, wobei der Wärmetauscher vorzugsweise mit einem Trockner der Biomasse in Verbindung steht.

12. Anlage nach einem der Ansprüche 9 bis 11, **dadurch gekennzeichnet, dass** ein Mittel (34) zum Durchführen einer Elektrolyse vorgesehen ist und dass eine Sauerstoffleitung (35) vom Mittel (34) zum Durchführen der Elektrolyse zur Brennkammer (17) führt und/oder dass eine weitere Sauerstoffleitung (36) vom Mittel (34) zum Durchführen der Elektrolyse zur Pyrolyseeinheit (2) führt und/oder dass eine Wasserstoffleitung (40) vom Mittel (34) zum Durchführen der Elektrolyse bis zu einem Gaszwischenspeicher (37) führt.

13. Anlage nach einem der Ansprüche 9 bis 12, **dadurch gekennzeichnet, dass** die Pyrolyseeinheit (2) eine Sauerstoffzufuhr aufweist, wobei die Zufuhr von Sauerstoff, insbesondere Luft und/oder durch das Mittel (34) zum Durchführen der Elektrolyse erzeugter Sauerstoff, in die Pyrolyseeinheit (2) in Abhängigkeit von der Pyrolysetemperatur regelbar ist, wobei vorzugsweise die Pyrolyseeinheit (2) einwandig ist.

14. Anlage nach einem der Ansprüche 9 bis 12, **dadurch gekennzeichnet, dass** die Pyrolyseeinheit (2) einen Doppelmantel (41) aufweist und dass eine Leitung für Synthesegas vom Reaktor (16) in den durch den Doppelmantel (34) gebildeten Raum vorgesehen ist, um das Innere der Pyrolyseeinheit (2) auf Pyrolysetemperatur bzw. zum Annähern auf die Pyrolysetemperatur aufzuheizen.

15. Anlage nach einem der Ansprüche 9 bis 14, **dadurch gekennzeichnet, dass** sie eine Entnahmeeinrichtung für die verwendete Kohlenstoffquelle (19) aus dem Reaktor (16) aufweist, und dass sie vorzugsweise einen Wärmetauscher für das entnommene Kohlenstoffmaterial, insbesondere eine Transportvorrichtung mit einem Kühlmedium, aufweist, wobei der Wärmetauscher vorzugsweise mit einem Trockner der Biomasse in Verbindung steht.
